# FASCICULE DE BREVET EUROPEEN

(11) **EP 0 821 467 B1**
(45) Date de publication et mention de la délivrance du brevet: **11.06.2003**
(21) Numéro de dépôt: 97401722.0
(22) Date de dépôt: 17.07.1997
(51) Int. Cl.: H02K 17/24, H02P 7/635

(54) **Procédé de commande d'une machine électrique tournante à double alimentation et machine utilisant ce procédé**
Steuerungsverfahren für eine zweifach gespeiste Drehfeldmaschine und Maschine, die dieses Verfahren benützt
Control method for a dual powered induction machine and machine using this method

(30) Priorité: 26.07.1996 FR 9609450
(43) Date de publication de la demande: 28.01.1998
(60) Demande divisionnaire: 03000860.1
(73) Titulaire: CEGELEC, 92300 Levallois Perret (FR)
(72) Inventeur: Mirzaian, Abdullah, 90000 Belfort (FR); Godfroid, Henri, 90350 Evette-Salbert (FR); Morel, Laurent, 90000 Belfort (FR)
(74) Mandataire: Gosse, Michel

(56) Documents cités:
- DE-C- 558 171
- DE-C- 645 828
- US-A- 4 388 579
- US-A- 4 956 596
- PATENT ABSTRACTS OF JAPAN vol. 010, no. 386 (E-467), 24 décembre 1986 & JP 61 177195 A (TOSHIBA CORP), 8 août 1986,
- WALLACE A K ET AL: "THE POTENTIAL OF BRUSHLESS DOUBLY-FED MACHINES FOR ADJUSTABLE SPEED DRIVES" ANNUAL PULP AND PAPER INDUSTRY TECHNICAL CONFERENCE, SEATTLE, JUNE 18 - 22, 1990, no. -, 18 juin 1990, INSTITUTE OF ELECTRICAL AND ELECTRONICS ENGINEERS, pages 45-50, XP000166437

## Description

L'invention porte sur la commande d'une machine électrique tournante à double alimentation.

On sait qu'une telle machine peut notamment constituer un moteur pour entrainer à vitesse variable des charges tournantes en utilisant un convertisseur statique de fréquence. Elle permet alors en outre un contrôle du couple d'entrainement dans les quatre quadrants couple-vitesse. De manière générale une telle machine comporte les éléments suivants :
- Un stator ayant des bornes de raccordement et un groupe d'enroulements polyphasés raccordés entre ces bornes et répartis angulairement autour d'un axe. Ces enroulements reçoivent des courants statoriques alternatifs ayant une même fréquence et des déphasages mutuels définissant un sens de déphasage statorique. Ces courants créent en circulant dans ces enroulements un champ magnétique tournant autour de cet axe à une vitesse proportionnelle à cette fréquence dans un sens de rotation défini par ce sens de déphasage.
- Un rotor ayant des bornes de raccordement et un groupe d'enroulements raccordés entre ces bornes et portés par un arbre monté rotatif autour dudit axe, une vitesse de ladite machine étant une vitesse de rotation de cet arbre. Ces enroulements sont répartis angulairement autour de cet axe et reçoivent des courants rotoriques alternatifs ayant une même fréquence et des déphasages mutuels définissant en sens de déphasage rotorique. Ces courants créent en circulant dans ces enroulements un champ tournant autour de cet axe par rapport à ce rotor à une vitesse proportionnelle à cette fréquence dans un sens de rotation défini par ce sens de déphasage. Un couplage inductif est réalisé entre les enroulements du stator et ceux du rotor pour qu'une circulation simultanée des courants statoriques et rotoriques applique un couple à cet arbre. Ce couplage inductif entraine l'existence d'un rapport de transformation de la machine égal au rapport d'une tension primaire pouvant être appliquée entre les bornes de raccordement du rotor à une tension secondaire apparaissant aux bornes de raccordement du stator en raison de ce couplage en l'absence de rotation du rotor.
- Enfin deux ensembles auxiliaires constituant un ensemble statorique et un ensemble rotorique raccordés aux bornes de raccordement du stator et du rotor pour faire circuler des courants statoriques et rotoriques traversant ces deux ensembles au moins dans des parties de ces deux ensembles raccordées à ces bornes, respectivement. L'un au moins de ces deux ensembles auxiliaires constitue un ensemble auxiliaire actif commandant au moins la fréquence desdits courants traversant cet ensemble.

L'ensemble statorique peut typiquement raccorder les bornes de raccordement du stator à un réseau constituant une source de tension alternative à une fréquence de réseau. Il fait alors circuler desdits courants statoriques créant un champ magnétique tournant autour dudit axe à une vitesse constituant une vitesse de synchronisme. L'ensemble auxiliaire actif est alors constitué par l'ensemble rotorique, et ce dernier a une fréquence commandée et un sens de déphasage commandé. Il est raccordé aux bornes de raccordement du rotor pour faire passer ces bornes desdits courants rotoriques ayant la fréquence de ce générateur et un sens de déphasage rotorique défini par le sens de déphasage de cet ensemble.

L'ensemble rotorique est usuellement un convertisseur de fréquence connecté entre le réseau et les bornes de raccordement du rotor.

Le document US-A-4 956 596 décrit une telle machine. Dans cette machine, aux basses vitesses, depuis le démarrage jusqu'à une vitesse prédéterminée, le stator de la machine est alimenté à tension et fréquence variables par un onduleur puis, à partir de cette vitesse, le stator est directement alimenté par le réseau tandis que l'onduleur est commuté vers le rotor et fonctionne en récupération. Enfin, à 100 % de la vitesse de fonctionnement, l'onduleur est déconnecté et le réseau seul alimente directement le stator.

Les avantages d'un moteur constitué par une telle machine s'accompagnent malheureusement d'un coût de fabrication plus élevé que celui d'un moteur de type plus ordinaire sans convertisseur associé. Une fraction importante de ce supplément de coût résulte de la nécessité d'alimenter le rotor par un convertisseur de puissance suffisante.

La présente invention a notamment pour but de diminuer le coût de l'ensemble associant la machine et son convertisseur d'alimentation rotorique, par rapport aux solutions conventionnelles.

Dans ce but elle a notamment pour objet un procédé de commande d'une machine électrique tournante à double alimentation, ce procédé étant caractérisé par le fait qu'un rapport de transformation de la machine est modifié en fonction de la vitesse de la machine. Le but de la présente invention peut ainsi être atteint parce que la modification dudit rapport de transformation permet de maintenir les puissances active et réactive fournies au rotor par le convertisseur tout en diminuant une puissance apparente de ce dernier. Cette puissance apparente est égale au produit de l'intensité maximale par la tension maximale susceptibles d'être fournies par le convertisseur. Elle constitue un facteur important de son coût de fabrication. Pour permettre la diminution de la taille du convertisseur, cette invention tire parti du fait que, dans les machines connues, l'intensité et la tension en sortie du convertisseur prenaient leurs valeurs maximales respectives pour deux vitesses différentes de la machine. La modification du rapport de transformation de la machine entre ces deux vitesses permet alors d'abaisser l'une au moins de ces deux valeurs maximales, donc de diminuer la taille du convertisseur.

Dans une mise en oeuvre de l'invention on court-circuite au départ les enroulements du stator. On applique une tension aux enroulements du rotor au travers d'un convertisseur statique de fréquence. On fait monter le rotor en vitesse par augmentation de la fréquence du convertiseur jusqu'à une vitesse prédéterminée Nmin inférieure à la vitesse de synchronisme. On déconnecte les enroulements du stator à l'instant où le rotor est amené en rotation à cette vitesse prédéterminée. On applique la tension du réseau aux enroulements du stator. Ensuite on diminue la fréquence du convertisseur pour faire tourner la machine jusqu'à une vitesse Ntrs définie par le type de charge. A la vitesse Ntrs on change le rapport de transformation de la machine. Enfin on diminue encore la fréquence jusqu'à la vitesse nominale de la machine Nmax. Les vitesses Nmin, Ntrs, Nmax sont prédéterminées en fonction des caractéristiques de la charge à appliquer à la machine.

Par rapport au système connu dit de "récupération d'énergie rotorique" ou encore "cascade hyposynchrone ou hypo-hypersynchrone", une machine à double alimentation présente l'avantage d'avoir une vitesse continuement variable depuis l'arrêt jusqu'à la vitesse nominale et inversement. Par ailleurs, grâce au procédé selon l'invention, il est possible d'utiliser un convertisseur de fréquence dont la puissance est très inférieure à la puissance fournie par la machine dont il règle la vitesse de rotation. Il en résulte que des convertisseurs statiques de très grande puissance disponibles aujourd'hui pourront être utilisés sur des machines à double alimentation de puissance plus importante encore. Il en résulte de même que des machines à double alimentation dont la puissance est fixée pourront être équipées d'un convertisseur statique de puissance plus petite.

La réduction de la taille du convertisseur statique de fréquence prend toute son importance et son intérêt quand le couple résistant appliqué à la machine fonctionnant comme moteur est proportionnel au carré de la vitesse de rotation. C'est le cas en particulier quand la machine est destinée à être couplée à une pompe centrifuge, un ventilateur, un compresseur, une turbine, une hélice de propulsion de navire, etc....

Les machines à double alimentation ayant un fonctionnement réversible, le procédé de la présente invention s'applique aussi pour la fourniture d'énergie au réseau électrique quand la machine est couplée à une éolienne, une turbine hydraulique ou tout autre dispositif moteur.

On peut aussi contrôler la puissance réactive fournie ou absorbée par le stator vers le réseau.

A l'aide des figures schématiques ci-jointes on va décrire ci-après à simple titre d'exemple comment la présente invention peut être mise en oeuvre. Lorsqu'un même élément est représenté sur plusieurs figures il est désigné par des signes de référence identiques.

La figure 1 représente une machine selon l'invention.

La figure 2 représente un dispositif d'adaptation de la machine de la figure 1.

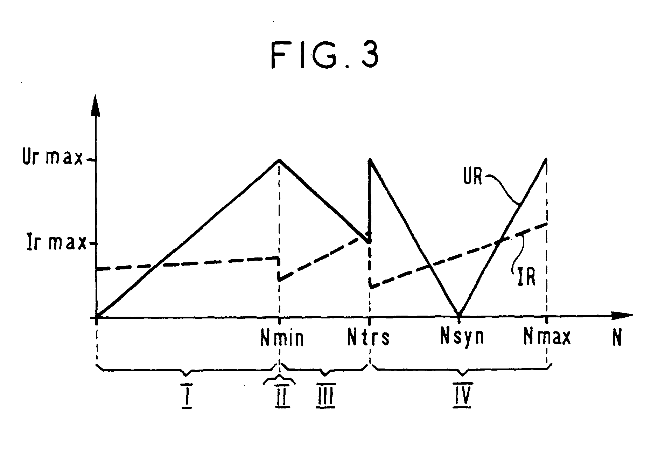

La figure 3 représente des diagrammes de variation d'un courant rotorique IR et d'une tension rotorique UR de cette machine en fonction de sa vitesse N portée en abscisses. Elle montre aussi la succession des modes de fonctionnement de cette machine.

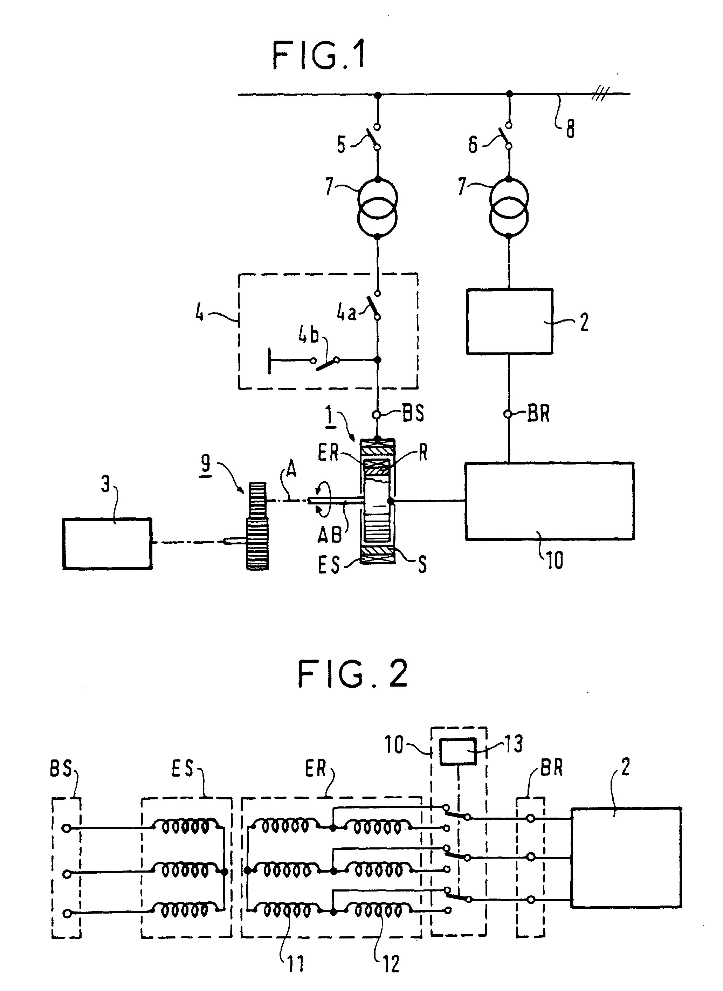

Conformément à la figure 1, une machine à double alimentation comprend essentiellement :
- un ensemble principal 1 ayant un axe A et constitué d'un stator S ayant des enroulements ES et d'un rotor R ayant des enroulements ER,
- un ensemble statorique constitué par un ensemble de contacteurs mécaniques ou statiques 4 pour court-circuiter les enroulements du stator ou les relier au réseau électrique 8 au travers d'organes de protection conventionnels tels que des disjoncteurs 5,
- un ensemble rotorique actif constitué par un convertisseur statique de fréquence 2 relié en sortie aux enroulements du rotor et en entrée au réseau électrique 8 au travers d'un organe de protection 6, et
- un transformateur 7 qui sert à adapter les tensions de la machine et du convertisseur à la tension du réseau électrique. La machine est destinée à être couplée par l'intermédiaire de son arbre AB à une charge mécanique 3 par l'intermédiaire d'un éventuel réducteur ou multiplicateur de vitesse 9. Undit dispositif d'adaptation est représenté en 10. Le stator et le rotor sont du type polyphasé, par exemple triphasé. Il est entendu que d'autre configurations sont possibles, comme par exemple un bobinage statorique composé de deux enroulements en triphasé, décalés de 30 degrés électriques, de couplage triangle ou étoile et un bobinage rotorique de couplage étoile ou tout autre arrangement, par exemple un bobinage rotorique diphasé.

Le convertisseur statique de fréquence 2 est du type onduleur source de tension ou onduleur source de courant ou encore cycloconvertisseur et peut comporter différents types de semiconducteurs: transistors, bipolaires ou IGBT ou d'un autre type; thyristors ou thyristors GTO, MCT, etc....

Les contacteurs 4a et 4b de l'ensemble 4 sont par exemple du type mécanique conventionnel et dans ce cas il est utile de prévoir un inter verrouillage interdisant le court-circuit des enroulements du stator simultanément à l'alimentation de ceux-ci par le réseau. Ils peuvent aussi être du type statique utilisant des thyristors avec commutation forcée ou des thyristors du type GTO ou tout autre semiconducteurs réalisant la fonction de fermeture et ouverture de circuits électriques.

Les contacteurs 4a,4b sont commandés par un circuit électronique (non représenté) de manière à être actionnés simultanément et en opposition pour court-circuiter les enroulements du stator ou les relier au réseau électrique 8 quand la machine atteint une vitesse prédéterminée particulière. De préférence, ces contacteurs sont du type statique lorsque la machine passe fréquemment par cette valeur prédéterminée particulière de vitesse de rotation au cours de son fonctionnement. Ils sont par exemple constitués de thyristors, les enroulements du stator étant du type triphasé. De même que les autres éléments de la machine, ils sont représentés en schéma unifilaire sur la figure 1. Ils peuvent être d'une autre nature, transistor par exemple, et être alors commandés en tout ou rien, c'est à dire à pleine ouverture ou bloqués ou encore ils peuvent être commandés avec un angle d'amorçage variable par rapport à la phase des ondes sinusoïdales du réseau ou de l'ensemble 1, permettant ainsi un réglage de la tension ou du courant statorique.

Le nombre de pôles dépend de la vitesse de la machine et des fréquences statorique et rotorique choisies en fonction du réseau d'alimentation et du type de convertisseur statique utilisé.
Les valeurs à donner au rapport de transformation de la machine sont déterminées, d'une part, par l'excursion totale de la vitesse de rotation mécanique autour de la vitesse de synchronisme, et d'autre part, par la tension de dimensionnement du convertisseur statique.

Le procédé de commande de la machine à double alimentation va être maintenant décrit.

Au démarrage de la machine, les enroulements du stator sont court-circuités par l'ensemble 4 (contacteur 4a à l'état ouvert non passant et contacteur 4b à l'état fermé passant). Les enroulements du rotor sont alimentés en tension par le réseau 8 au travers du convertisseur 2.

Cette première phase de fonctionnement de la machine, est appelée ci-après mode I.

Dans une seconde phase, appelée ci-après mode II, on supprime le court-circuit des enroulements du stator et on relie les enroulements du stator au réseau 8. Cette commutation est réalisée par les contacteurs de l'ensemble 4 (contacteur 4a amené à l'état fermé passant et contacteur 4b amené à l'état ouvert non passant). A cet effet, ces contacteurs sont commandés par une circuiterie électronique non représentée qui compare la vitesse de la machine à la vitesse prédéterminée particulière et qui est agencée aussi pour réaliser la commutation lors de la concordance de phase des tensions statoriques et du réseau aux fins de couplage. Quand les contacteurs sont du type statique, la commutation peut ne durer que quelques millisecondes.

Dans un mode III, après la commutation et la synchronisation du mode II, on diminue la fréquence du convertisseur pour augmenter la vitesse de la machine de la vitesse Nmin jusqu'à une vitesse Ntrs définie par le type de charge.

A la vitesse Ntrs on passe au mode IV. Pour cela on change un rapport de transformation interne à l'ensemble principal de la machine ou on ajoute un organe entre le réseau et le stator ou entre le rotor et le convertisseur de façon à changer le rapport de transformation de la machine vu par le convertisseur. Ceci a pour but d'adpter la puissance apparente du convertisseur aux tension et courant rotoriques correspondant à la puissance active rotorique consommée.

Puis on diminue la fréquence jusqu'à la vitesse nominale de la machine Nmax. La vitesse Ntrs est donc comprise entre Nmin et Nmax. Au passage par la vitesse de synchronisme Nsyn (fonction du nombre de pôles et de la fréquence du réseau) le rotor est alimenté par des courants continus. Dans les modes III et IV, le convertisseur statique impose au rotor une fréquence rotorique égale à la différence entre la fréquence du réseau et la fréquence correspondant à la vitesse de la machine.

Entre la vitesse Nmin et la vitesse Nsyn, le convertisseur renvoie dans le réseau 8 de l'énergie électrique dite de glissement de l'ensemble principal 1 par rapport à la vitesse Nsyn.

A la vitesse Nsyn, le convertisseur 2 alimente le rotor en courants continus.

Au delà de la vitesse Nsyn, le convertisseur 2 fournit de la puissance à la machine, par le rotor, et ceci proportionnellement au glissement par rapport à la vitesse Nsyn.

Le dispositif d'adaptation changeant le rapport de transformation vu du convertisseur peut être de différents types :
Il est soit interne à l'ensemble principal :
   - enroulements à nombre de spires variable au rotor ou au stator.
   - Changement du couplage étoile-triangle au stator ou au rotor.
   soit externe à cet ensemble :
   - insertion ou suppression d'un autotransformateur ou transformateur entre le rotor et le convertisseur,
   - insertion ou suppression d'un autotransformateur ou transformateur entre le stator et le réseau.

Conformément à la figure 2, et à simple titre d'exemple, les enroulements statoriques ES et rotoriques ER sont du type triphasé. Les enroulements statoriques sont invariables. Le dispositif d'adaptation 10 de la machine permet de donner au groupe d'enroulements ER du rotor R une première et une deuxième configurations donnant respectivement une première valeur et une deuxième valeur au rapport de transformation de la machine.

Pour cela chacune des phases des enroulements rotoriques comporte deux bobines identiques 11 et 12. Un commutateur 13 commandé par la vitesse de la machine permet au convertisseur 2 d'alimenter soit les deux bobines en série, soit seulement la bobine 11, la bobine 12 étant alors placée en circuit ouvert. Le doublement ainsi réalisé du rapport de transformation de la machine apparait particulièrement adapté au cas où l'arbre AB est couplé à une charge 3 dont le couple résistant est proportionnel au carré de la vitesse de la machine.

Il a été indiqué ci-dessus à titre d'exemple qu'un seul changement du rapport de transformation est réalisé à la vitesse Ntrs. On peut cependant utiliser plus de deux rapports de transformation, les changements se faisant à des vitesses successives comprises entre Nmin et Nmax. Ceci permet de réduire encore la taille du convertisseur.

Une variante du procédé décrit ci-dessus peut être réalisée en inversant le stator et le rotor. Le stator est alors alimenté par le convertisseur et le rotor est d'abord en court-circuit, puis couplé sur le réseau.

L'utilisation éventuelle d'un réducteur ou multiplicateur de vitesse mécanique permet dans tous les cas de positionner la vitesse de synchronisme Nsyn de façon optimale par rapport à la vitesse Nmax.

## Revendications

1. Procédé de commande d'une machine électrique tournante à double alimentation, la fréquence d'un courant parcourant des enroulements de cette machine étant commandée, ce procédé étant **caractérisé par le fait qu'**un rapport de transformation de la machine est modifié en réponse à une variation de la vitesse de la machine.

2. Machine électrique tournante à double alimentation comportant:
- un stator (S) ayant des bornes de raccordement (BS) et un groupe d'enroulements (ES) polyphasés raccordés entre ces bornes et répartis angulairement autour d'un axe (A) de cette machine pour que des courants statoriques alternatifs ayant une même fréquence et des déphasages mutuels définissant un sens de déphasage statorique puissent créer en circulant dans ces enroulements un champ magnétique tournant autour de cet axe à une vitesse proportionnelle à cette fréquence dans un sens de rotation défini par ce sens de déphasage,
- un rotor (R) ayant des bornes de raccordement (BR) et un groupe d'enroulements (ER) raccordés entre ces bornes et portés par un arbre (AB) monté rotatif autour dudit axe, une vitesse de ladite machine étant une vitesse de rotation de cet arbre, ces enroulements étant répartis angulairement autour de cet axe pour que des courants rotoriques alternatifs ayant une même fréquence et des déphasages mutuels définissant en sens de déphasage rotorique puissent créer en circulant dans ces enroulements un champ tournant autour de cet axe par rapport à ce rotor à une vitesse proportionnelle à cette fréquence dans un sens de rotation défini par ce sens de déphasage, un couplage inductif étant réalisé entre les enroulements du stator et ceux du rotor pour qu'une circulation simultanée des courants statoriques et rotoriques applique un couple à cet arbre, ce couplage inductif entrainant l'existence d'un rapport de transformation de la machine égal au rapport d'une tension primaire pouvant être appliquée entre les bornes de raccordement du rotor à une tension secondaire apparaissant aux bornes de raccordement du stator en raison de ce couplage en l'absence de rotation du rotor,et
- deux ensembles auxiliaires constituant un ensemble statorique (4) et un ensemble rotorique (2) raccordés aux bornes de raccordement du stator et du rotor pour faire circuler des courants statoriques et rotoriques traversant ces deux ensembles au moins dans des parties de ces deux ensembles raccordées à ces bornes, respectivement, l'un au moins de ces deux ensembles auxiliaires constituant un ensemble auxiliaire actif (2) commandant au moins la fréquence desdits courants traversant cet ensemble,
cette machine étant **caractérisée par le fait qu'**elle comporte en outre un dispositif d'adaptation (10) commandant ledit rapport de transformation de la machine.

3. Machine selon la revendication 2, ledit ensemble statorique (4) pouvant raccorder les bornes de raccordement (BS) du stator à un réseau (8) constituant une source de tension alternative à une fréquence de réseau pour faire circuler desdits courants statoriques créant un champ magnétique tournant autour dudit axe (A) à une vitesse constituant une vitesse de synchronisme, ledit ensemble auxiliaire actif étant constitué par ledit ensemble rotorique (2), cet ensemble rotorique ayant une fréquence commandée et un sens de déphasage commandé et étant raccordé aux bornes de raccordement (BR) du rotor pour faire passer par ces bornes desdits courants rotoriques ayant la fréquence de ce générateur et un sens de déphasage rotorique défini par le sens de déphasage de cet ensemble.

4. Machine selon la revendication 3, ledit ensemble rotorique étant un convertisseur de fréquence (2) connecté entre ledit réseau (8) et lesdites bornes de raccordement (BR) du rotor (R).

5. Machine selon la revendication 3, ledit dispositif d'adaptation (10) permettant de donner audit rapport de transformation de la machine d'abord une première valeur, puis de réaliser une commutation de rapport donnant à ce rapport une deuxième valeur supérieure à la première, ces deux valeurs étant prédéterminées.

6. Machine selon la revendication 5, ledit ensemble statorique (4) permettant de placer d'abord les enroulements (ES) du stator (S) en court-cicuit, puis de réaliser une commutation statorique connectant les bornes de raccordement (BS) du stator au dit réseau (8),
la dite commutation statorique, la fréquence et le sens de déphasage dudit ensemble rotorique (2) et ladite commutation de rapport étant commandés par la vitesse de la machine, la vitesse commandant la commutation statorique étant inférieure à ladite vitesse du synchronisme et à la vitesse commandant la commutation rotorique.

7. Machine selon la revendication 3, ledit dispositif d'adaptation (10) permettant de donner audit groupe d'enroulements (ER) du rotor (R) une première et une deuxième configurations réalisant respectivement ladite première valeur et la dite deuxième valeur du rapport de transformation de la machine.

8. Machine selon la revendication 5, ledit arbre (AB) étant accouplé à une charge (3) lui appliquant un couple résistant sensiblement proportionnel au carré de la vitesse de la machine, ladite deuxième valeur étant sensiblement le double de ladite première valeur du rapport de tranformation de la machine.

## Patentansprüche

1. Verfahren zur Steuerung einer elektrischen Maschine mit Zweifachspeisung, wobei die Frequenz eines die Wicklungen dieser Maschine durchfließenden Stroms gesteuert ist, welches Verfahren **dadurch gekennzeichnet ist, dass** ein Übersetzungsverhältnis der Maschine in Antwort auf eine Veränderung der Geschwindigkeit der Maschine modifiziert wird.

2. Elektrische Maschine mit Zweifachspeisung, welche umfasst:
einen Stator (S) mit Anschlussklemmen (BS) und einem Satz von Mehrphasenwicklungen (ES), die zwischen diese Klemmen geschaltet sind und winkelig um eine Achse (A) dieser Maschine verteilt sind, damit die Statorwechselströme, die eine gleiche Frequenz und, eine Richtung der Statorphasenverschiebung definierende, gegenseitige Phasenverschiebungen aufweisen, beim Fließen in diesen Wicklungen ein magnetisches Drehfeld um diese Achse erzeugen können, mit einer Geschwindigkeit, die zu dieser Frequenz in einer durch diese Phasenverschiebungsrichtung definierten Drehrichtung proportional ist, einen Rotor (R) mit Anschlussklemmen (BR) und einem Satz von Wicklungen (ER), die zwischen diese Klemmen geschaltet sind, und von einer um die Achse drehbar gelagerten Welle (AB) getragen sind, wobei eine Geschwindigkeit der Maschine eine Drehgeschwindigkeit dieser Welle ist, diese Wicklungen winkelig um diese Achse verteilt sind, damit Rotorwechselströme, die eine gleiche Frequenz und, eine Richtung der Rotorphasenverschiebung definierende, gegenseitige Phasenverschiebungen aufweisen, beim Fließen in diesen Wicklungen ein Drehfeld um diese Achse bezüglich dieses Rotors erzeugen können, mit einer Geschwindigkeit, die zu dieser Frequenz in einer durch diese Phasenverschiebungsrichtung definierten Drehrichtung proportional ist, eine induktive Kopplung zwischen den Wicklungen des Stators und jenen des Rotors erfolgt, so dass ein gleichzeitiges Fließen der Stator- und Rotorströme ein Moment auf diese Welle ausübt, diese induktive Kopplung das Vorliegen eines Übersetzungsverhältnisses der Maschine mit sich bringt, welches zum dem Verhältnis einer Primärspannung, die zwischen den Anschlussklemmen des Rotors angelegt werden kann, und einer Sekundärspannung, die an den Anschlussklemmen des Stators wegen dieser Kopplung bei fehlender Drehung des Rotors auftritt, gleich ist, und zwei eine Statoranordnung (4) und eine Rotoranordnung (2) bildende zusätzliche Anordnungen, die mit den Anschlussklemmen des Stators und des Rotors verbunden sind um die Stator- und Rotorströme fließen zu lassen, welche diese beiden Anordnungen wenigstens in den jeweils mit diesen Klemmen verbundenen Teilen der beiden Anordnungen durchqueren, wobei wenigstens eine dieser beiden zusätzlichen Anordnungen eine zusätzliche aktive Anordnung (2), die wenigstens die Frequenz der diese Anordnung durchquerenden Ströme steuert,
welche Maschine **dadurch gekennzeichnet ist, dass** sie außerdem eine Anpassungsvorrichtung (10) umfasst, die das Übersetzungsverhältnis der Maschine steuert.

3. Maschine nach Anspruch 2, wobei die Statoranordnung (4) die Anschlussklemmen (BS) des Stators mit einem Netz (8) verbinden kann, das eine
Wechselspannungsquelle mit einer Netzfrequenz ist, um die Statorströme fließen zu lassen, die ein magnetisches Drehfeld um die Achse (A) erzeugen, mit einer Geschwindigkeit, welche eine Gleichlaufgeschwindigkeit ist, welche zusätzliche aktive Anordnung durch die Rotoranordnung (2) gebildet ist, wobei die Rotoranordnung eine gesteuerte Frequenz und eine gesteuerte Phasenverschiebungsrichtung aufweist und mit den Anschlussklemmen (BR) des Rotors verbunden ist, um durch diese Klemmen die Rotorströme fließen zu lassen, welche die Frequenz dieses Generators und eine durch die Phasenverschiebungsrichtung dieser Anordnung definierte Rotorphasenverschiebung aufweisen.

4. Maschine nach Anspruch 3, wobei die Rotoranordnung ein Frequenzwandler (2) ist, der zwischen das Netz (8) und die Anschlussklemmen (BR) des Rotors (R) geschaltet ist.

5. Maschine nach Anspruch 3, wobei die Anpassungsvorrichtung (10) ermöglicht, dem Übersetzungsverhältnis der Maschine zunächst einen ersten Wert zu geben, dann eine Kommutation der Übersetzung zu bewirken, welche diesem Verhältnis einen zweiten Wert gibt, der größer ist als der erste, wobei diese beiden Werte vorbestimmt sind.

6. Maschine nach Anspruch 5, wobei die Statoranordnung (4) ermöglicht, zunächst die Wicklungen (ES) des Stators (S) kurzzuschließen, dann eine Statorkommutation zu bewirken, welche die Anschlussklemmen (BS) des Stators mit dem Netz (8) verbindet, wobei die Statorkommutation, die Frequenz und die Phasenverschiebungsrichtung der Rotoranordnung (2) und die Übersetzungskommutation durch die Geschwindigkeit der Maschine gesteuert sind, wobei die die Statorkommutation steuernde Geschwindigkeit kleiner ist als die Gleichlaufgeschwindigkeit und die die Rotorkommutation steuernde Geschwindigkeit.

7. Maschine nach Anspruch 3, wobei die Anpassungsvorrichtung (10) ermöglicht, dem Wicklungssatz (ER) des Rotors (R) eine erste und eine zweite Konfiguration zu geben, die jeweils den ersten Wert und den zweiten Wert des Übersetzungsverhältnisses der Maschine realisieren.

8. Maschine nach Anspruch 5, wobei die Welle (AB) mit einer Last (3) gekoppelt ist, die ihr ein im wesentlichen zum Quadrat der Geschwindigkeit der Maschine proportionales Widerstandsmoment auferlegt, wobei der zweite Wert im wesentlichen das Zweifache des ersten Werts des Übersetzungsverhältnisses der Maschine ist.

## Claims

1. A method of controlling a rotary electric machine having a dual power supply, the frequency of a current flowing through the windings of the machine being controlled, said method being **characterized by** the fact that a transformation ratio of the machine is changed in response to variation in the speed of the machine.

2. A dual power supply rotary electric machine comprising:
a stator (S) having connection terminals (BS) and a group of polyphase windings (ES) connected between said terminals and angularly distributed about an axis (A) of the machine so that alternating stator currents having the same frequency and mutual phase offsets defining a stator phase-displacement direction can flow through the windings to create a magnetic field that rotates about the axis at a speed proportional to said frequency in a rotation direction defined by the phase-displacement direction;
a rotor (R) having connection terminals (BR) and a group of windings (ER) connected between said terminals and carried by a shaft (AB) mounted to rotate about said axis, a speed of said machine being a speed of revolution of said shaft, the windings being distributed angularly about the axis so that alternating rotor currents having the same frequency and mutual phase offsets defining a rotor phase-displacement direction can flow through the windings to create a field that rotates about said axis relative to the rotor at a speed proportional to said frequency in a rotation direction defined by the phase-displacement direction, inductive coupling being implemented between the windings of the stator and the windings of the rotor so that by flowing simultaneously, the stator currents and the rotor currents apply torque to the shaft, the inductive coupling causing a transformation ratio of the machine to exist that is equal to the ratio between a primary voltage that can be applied across the connection terminals of the rotor and a secondary voltage appearing across the connection terminals of the stator because of the coupling in the absence of rotation of the rotor; and
two auxiliary assemblies constituting a stator assembly (4) and a rotor assembly (2) connected to the connection terminals of the stator and of the rotor to cause respective stator current and rotor current flows to pass through the two assemblies connected to the terminals, at least one of the two auxiliary assemblies constituting an active auxiliary assembly (2) controlling at least the frequency of said current flows passing through the assembly;
said machine being **characterized by** the fact that it further includes a matching circuit (10) controlling said transformation ratio of the machine.

3. A machine according to claim 2, it being possible for said stator assembly (4) to connect the connection terminals (BS) of the stator to a network (8) constituting an alternating voltage source at a network frequency so as to cause said stator currents to flow, thereby creating a magnetic field rotating about said axis (A) at a speed constituting a synchronous speed, said active auxiliary assembly being constituted by said rotor assembly (2), the rotor assembly having a controlled frequency and a controlled phase-displacement direction, and being connected to the connection terminals (BR) of the rotor to cause said rotor currents to flow via said terminals, which currents have the frequency of the generator and a rotor phase-displacement direction defined by the phase-displacement direction of the assembly.

4. A machine according to claim 3, said rotor assembly being a frequency converter (2) connected between said network (8) and said connection terminals (BR) of the rotor (R).

5. A machine according to claim 3, said matching circuit (10) making it possible firstly to give a first value to said transformation ratio of the machine, then to perform ratio switching to give it a second value that is greater than the first value, both values being predetermined.

6. A machine according to claim 5, said stator assembly (4) making it possible firstly to short-circuit the windings (ES) of the stator (S), then to perform stator switching to connect the connection terminals (BS) of the stator to said network (8);
said stator switching, the frequency and the phase-displacement direction of said rotor assembly (2), and said ratio switching being controlled by the speed of the machine, the speed causing the stator switching being lower than said synchronous speed and than the speed causing the rotor switching.

7. A machine according to claim 3, said matching circuit (10) making it possible to give said group of windings (ER) of the rotor (R) first and second configurations respectively implementing said first value and said second value of the transformation ratio of the machine.

8. A machine according to claim 5, said shaft (AB) being coupled to a load (3) which opposes moment to it that is substantially proportional to the square of the speed of the machine, said second value being substantially twice said first value of the transformation ratio of the machine.
